# EUROPÄISCHE PATENTSCHRIFT

(11) **EP 1 527 980 B1**
(45) Veröffentlichungstag und Bekanntmachung des Hinweises auf die Patenterteilung: **02.12.2009**
(21) Anmeldenummer: 04025803.0
(22) Anmeldetag: 29.10.2004
(51) Int. Cl.: B62D 5/04, B62D 6/00

(54) **Gegengewichtsstapler mit einer Vorrichtung für eine elektro-hydraulische oder elektrische Lenkung**
Apparatus for a fork lift truck electro-hydraulic or electric steering system
Dispositif pour le système de direction d'un charriot élévateur

(30) Priorität: 03.11.2003 DE 10351162
(43) Veröffentlichungstag der Anmeldung: 04.05.2005
(73) Patentinhaber: Jungheinrich Aktiengesellschaft, 22047 Hamburg (DE)
(72) Erfinder: Schröder, Henrik, 21423 Winsen-Roydorf (DE); von Forstner, Michael, 24837 Schleswig (DE)
(74) Vertreter: Hauck Patent- und Rechtsanwälte

(56) Entgegenhaltungen:
- EP-A- 0 596 167
- WO-A-02/36410
- WO-A-03/024764
- DE-A1- 10 008 984
- DE-A1- 10 024 455
- DE-A1- 19 604 351
- DE-A1- 19 809 892
- US-A1- 2003 114 970

## Beschreibung

Die Erfindung bezieht sich auf einen Gegengewichtsstapler mit einer Vorrichtung für eine elektro-hydraulische oder elektrische Lenkung mindestens eines Rades eines Flurförderzeugsnach Anspruch 1.

### Hintergrund der Erfindung

Elektrische oder elektro-hydraulische Lenkvorrichtungen für Flurförderzeuge sind seit längerem bekannt. Mit Hilfe eines Lenkrades oder eines ähnlichen Lenkelementes, das vom Fahrer betätigt wird und das mit Hilfe eines Wellenabschnitts in mindestens einem Lager des Flurförderzeugs drehbar gelagert ist, wird ein Lenkgeber betätigt. Der Lenkgeber arbeitet zumeist elektrisch und ist in der Regel ein Potentiometer. Die elektrischen Signale werden auf eine Lenksteuerung übertragen, die den Lenkerausschlag in einen entsprechenden Lenkausschlag des zu lenkenden Rades umsetzt. Bei einer hydraulischen Lenkvorrichtung wird z. B. eine Pumpe betätigt, welche über ein Lenkventil auf einen Lenkzylinder wirkt, der den Einschlag der Räder bewirkt.

Im Zusammenhang mit derartigen Lenkvorrichtungen ist aus EP 0 596 167 bekannt geworden, die Übersetzung zwischen Lenkrad und Lenkmotor variabel zu machen, und zwar in Abhängigkeit von der Geschwindigkeit des Flurförderzeugs. Vorzugsweise wird die Lenkung um so "indirekter" je größer die Geschwindigkeit ist. Dadurch wird ein stabiles Fahrverhalten erhalten. Aus EP 0 722 878 ist ferner bekannt geworden, die Übersetzung nicht nur entlang einer vorgegebenen Kennlinie in Abhängigkeit von der Fahrgeschwindigkeit zu ändern, sondern eine Kennlinienschar in einer Steuervorrichtung abzulegen, um das Übersetzungsverhältnis bzw. die Übersetzungskennlinie wählbar zu gestalten, z. B. je nach Erfahrung und Geschicklichkeit des Fahrers einzustellen. Aus DE 100 08 984, die den Oberbegriff des Anspruchs1 beschreibt, ist bekannt geworden, die Lenkbewegung des lenkbaren Rades nicht nur von der Fahrgeschwindigkeit abhängig zu machen, sondern auch von der Masse und/oder von der Hubhöhe von einer mit dem Flurförderzeug aufgenommenen Last zu ändern. Aus diesem Dokument ist auch bekannt, den maximalen Ausschlag der gelenkten Räder durch mechanische Anschläge zu begrenzen. Bei höherer Geschwindigkeit ist die Lenkübersetzung derart, dass der Einschlag der gelenkten Räder geringer ist als bei langsamer Fahrt.

Aus WO 02136410 A ist für ein Fahrzeug bekannt geworden, die Lenkübersetzung von dem Lenkerausschlag und der Geschwindigkeit abhängig zu machen. Aus DE 100 24 455 ist bekannt geworden, den Schwenkwinkel eines Lenkers auf ± 120° zu begrenzen. Der Fahrer, auf dem Fahrerstand stehend, kann die Griffabschnitte des Lenkers von der Außenseite mit annähemd aufrechten Fäusten erfassen, so daß eine durch Druck oder Zug erzeugte Kraft im wesentlichen keine Drehkraft um die Achse des Lenkers verursacht. Ringförmige Schaltelemente sind am freien Ende des zugeordneten Griffabschnitts vorgesehen, die mit dem Daumen der den Griffabschnitt erfassenden Hand betätigbar sind.

Generell weisen elektro-hydraulische oder elektrische Lenksysteme erhebliche Vorteile auf. Die Lenkkräfte werden reduziert und im Kniebereich des Fahrers wird größerer Freiraum erhalten. Außerdem ist es mit geringem Aufwand möglich, die Lenkübersetzung während des Betriebes stufenlos zu verstellen.

### Zusammenfassung der Erfindung

Der Erfindung liegt die Aufgabe zugrunde, einen Gegengewichtsstapler mit einer Vorrichtung für eine elektro-hydraulische oder elektrische Lenkung mindestens eines Rades zu schaffen, mit welcher die Lenkbarkeit und die Fahrsicherheit des Flurförderzeugs verbessert wird.

Diese Aufgabe wird durch die Merkmale des Patentanspruchs 1 gelöst.

Bei der Erfindung nach Anspruch 1 wird ein Lenker verwendet, der nur einen geringen maximalen Lenkausschlag zu beiden Seiten der Neutralstellung aufweist, wobei der maximale Lenkausschlag durch feste Anschläge begrenzt ist. Der maximale Lenkausschlag ist kleiner als 180°, vorzugsweise etwa 110° zu jeder Seite. Der Lenker ist nach einer Ausgestaltung der Erfindung in die Neutralstellung vorgespannt, vorzugsweise mit Hilfe einer geeigneten Federanordnung. Erfindungswesentlich ist die Kombination dieses Lenkers mit einer geschwindigkeitsabhängigen Verstellung der progressiven Lenkübersetzung, so daß mit zunehmender Fahrgeschwindigkeit der maximale Ausschlag der gelenkten Räder bzw. des gelenkten Rades kleiner wird. Bei kleinen Lenkausschlägen im Bereich der Neutralstellung wird nur ein kleines Signal erzeugt, das jedoch bei größer werdenden Lenkausschlägen progressiv ansteigt.

Bei elektrischen oder elektro-hydraulischen Lenkvorrichtungen ist üblicherweise eine Übersetzung zwischen Lenker und Lenkmotor vorgesehen. Bei der Erfindung ist die Lenkübersetzung progressiv, d.h. im Bereich der Nullstellung des Lenkers ist die Lenkung relativ weich und wird härter bzw. direkter mit zunehmendem Ausschlag des Lenkers. Dies ist vorteilhaft bei stark eingeschränktem Drehwinkel des Lenkers.

Dem Lenker kann ein geeigneter Dämpfer zugeordnet werden: Dessen Wirkung kann vorteilhafterweise von Betriebsbedingungen des Fahrzeugs abhängig gemacht werden, um die Kippsicherheit zu erhöhen. Ferner können Lenkwinkel, Gierrate, Hubhöhe der Last, Gewicht der Last, Neigungswinkel des Hubgerüsts usw. Einfluß auf die Dämpfeinwirkung haben, um die Sicherheit zu gewährleisten.

Die Erfindung weist Vorteile auf So ist z. B. eine aktive Kraftrückkoppelung für den Fahrer wegen der festen Lenkanschläge nicht erforderlich. Darüber hinaus bedarf es keiner Lenkwinkelanzeige. Die reduzierte Drehbewegung des Lenkers verbessert die Handhabung beim Lenken. Die geschwindigkeitsabhängige Verstellung der Lenkübersetzung erhöht die Sicherheit des Flurförderzeugs bei höheren Geschwindigkeiten. Die festen Anschläge des Lenkers begrenzen in Kombination mit der geschwindigkeitsabhängigen Verstellung der Lenkübersetzung den maximalen Lenkausschlag des gelenkten Rades zunehmend mit wachsender Geschwindigkeit. Dadurch werden enge Kurvenfahrten vermieden, die sonst die Gefahr eines Umkippens bergen. Durch den eingeschränkten Drehwinkel können Bedienelemente des Flurförderzeugs in den Lenker integriert werden und sind dennoch immer gut erreichbar.

Wie bei bekannten Lenkvorrichtungen ist es bei der Erfindung von Vorteil, wenn nach einer Ausgestaltung der Erfindung die maximale Lenkgeschwindigkeit in Abhängigkeit von der Geschwindigkeit des Flurförderzeugs verändert wird, wodurch eine zusätzliche Sicherheit im Fahrbetrieb erhalten wird.

Aus der erwähnten DE 100 24 455 A1 ist ein besonderer Lenker für Flurförderzeuge bekannt geworden, dessen äußerer Umriß annähernd dreieckformig ist mit stark abgerundeten Ecken, wobei der Basisabschnitt dieses Dreiecks dem Fahrer zugekehrt ist und in der Neutralstellung des Lenkers quer zur Blickrichtung des Fahrers verläuft. In den Schenkelabschnitten, die die Enden des Basisabschnitts mit dem Scheitel der Dreieckskontur verbinden, sind ringförmige Bedienelemente angeordnet, die um eine Achse begrenzt verdrehbar sind, die annähernd mit der Achse des zugeordneten Schenkelabschnitts zusammenfällt. Die ringförmigen Bedienelemente betätigen im bekannten Fall die Fahrsteuerung. Die Verbindung des Lenkers mit einer Welle, an dem auch ein Lenkwinkelgeber sitzt, erfolgt bei dem bekannten Lenker über eine Mittelspeiche, welche den Scheitel der Dreieckskontur mit annähernd der Mitte des Basisabschnitts verbindet. Eine Ausgestaltung der Erfindung geht von einer ähnlichen Lenkerkonfiguration aus und sieht darüber hinaus vor, daß auf gegenüberliegenden Seiten der Nabe des Lenkers Bedienelemente für Funktionen des Flurförderzeugs angeordnet sind. Nach einer weiteren Ausgestaltung der Erfindung sind tastenartige Bedienelemente vorgesehen. Beispielsweise können diese Bedienelemente dazu dienen, daß Lasttragmittel gegenüber dem Mast des Flurförderzeugs zu neigen bzw. seitlich zu verschieben.

Bei der beschriebenen Ausgestaltung der Erfindung sind mithin Bedienelemente in den Lenker integriert, wodurch die Ergonomie im Hinblick auf die Handhabung des Flurförderzeugs verbessert wird, was zugleich zu einer höheren Produktivität führt.

Nach einer weiteren Ausgestaltung der Erfindung ist im Nabenbereich ein Anzeigenfeld oder ein Display angeordnet. Im Anzeigenfeld können Kontrolleuchten vorgesehen werden, und in einem Display können verschiedene Anzeigen erfolgen zur Überwachung von Funktionen des Flurförderzeugs.

### Kurzfigurenbeschreibung

Die Erfindung soll nachfolgend anhand eines in Zeichnungen dargestellten Ausführungsbeispiels näher erläutert werden.
- Fig. 1: zeigt schematisch eine erste Ausführungsform einer Lenkvorrichtung für einen Gegengewichtsstapler nach der Erfindung.
- Fig. 2: zeigt die Draufsicht auf eine Ausführungsform eines Lenkers der Lenkvorrichtung nach Fig. 1.
- Fig. 3: zeigt Kennlinien für die Übersetzung bei der Lenkvorrichtung nach der Erfindung.
- Fig.4: zeigt Kennlinien für die Begrenzung des maximalen Lenkausschlags des Lenkers nach den Fign. 1 und 2.
- Fig. 5: zeigt im Blockschaltbild eine zweite Ausführungsform einer Lenkvorrichtung für einen Gegengewichtsstapler nach der Erfindung.
- Fig. 6: zeigt schematisch einen Gegengewichtsstapler in Seitenansicht.
- Fig. 7: zeigt eine Draufsicht auf eine weitere Ausführungsform eines Lenkers nach der Erfindung.

### Ausführliche Beschreibung der Figuren

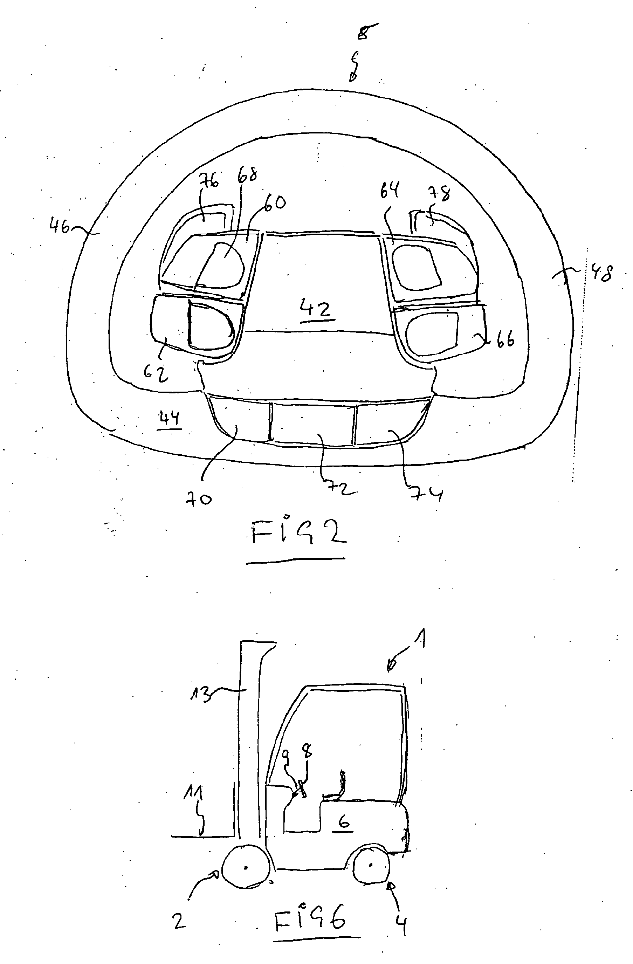

Fig. 6 zeigt sehr allgemein einen Vierrad-Gegengewichtsstapler 1, mit einem Paar Vorderrädern 2 und einem Paar Hinterrädern 4. Im Fahrzeugkörper 6 sind die verschiedenen Aggregate zum Betrieb des Staplers 1 angeordnet, z.B. ein Antriebsmotor für die Vorderräder 2, eine Bremsvorrichtung, eine Lenkvorrichtung, die von einem Lenker 8 betätigt wird, eine Antriebsvorrichtung für ein Lasttragmittel 11, die entlang eines Hubgerüstes 13 in der Höhe verstellbar ist. Einzelheiten sind weder dargestellt, noch müssen sie beschrieben werden, weil sie allgemein bekannt sind.

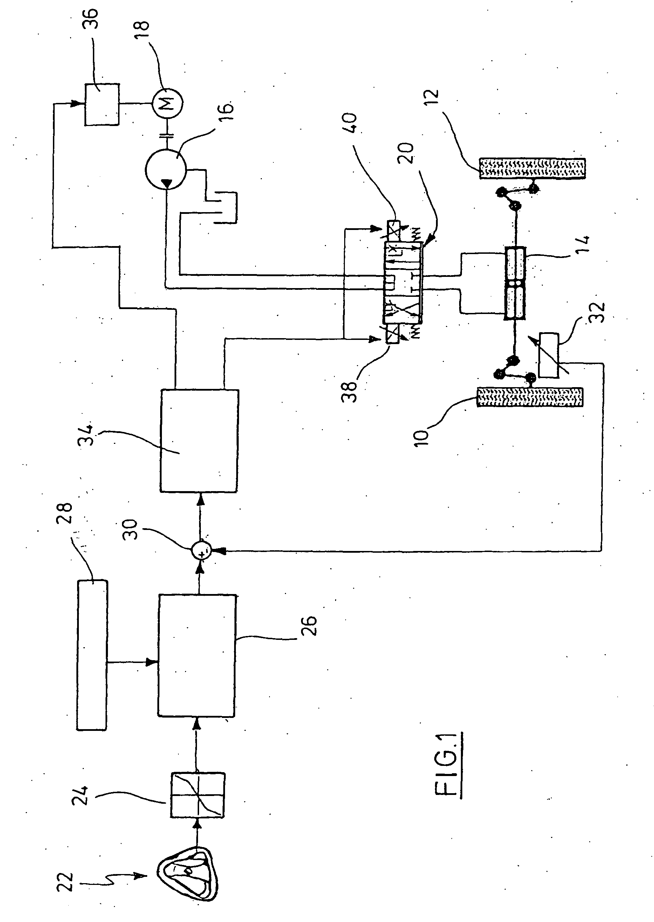

In Fig. 1 sind zwei Hinterräder 10, 12 eines Gegengewichtsstaplers, z.B. das nach Fig. 6, angedeutet. Die Räder 10, 12 werden gemeinsam gelenkt mit Hilfe eines hydraulischen Lenkzylinders 14. Der Lenkzylinder 14 wird von einer Pumpe 16 versorgt, die von einem Lenkmotor 18 angetrieben ist. Die Pumpe 16 ist über ein Elektromagnet-Steuerventil 20 mit dem Lenkzylinder 14 verbunden.

Die hydraulische Lenkvorrichtung wird betätigt von einem Lenker 22, der mit einer nicht gezeigten Welle im Stapler verbunden ist zwecks Drehung um eine Achse, wobei die Welle mit einem Lenkgeber gekoppelt ist, beispielsweise einem Potentiometer zwecks Erzeugung eines winkelabhängigen Lenksignals. Dieses Signal wird auf eine progressive Lenkübersetzungsvorrichtung 24 gegeben, deren Signal auf eine weitere Lenkübersetzungsvorrichtung 26 gegeben ist, die die Übersetzung in Abhängigkeit von der Fahrgeschwindigkeit ändert. Die progressive Übersetzung sorgt dafür, dass bei sehr kleinen Lenkerausschlägen eine geringe Ansprache der gelenkten Räder erfolgt. Letztere erhöht sich mit steigendem Lenkerausschlag. Die Fahrgeschwindigkeit wird von einer Geschwindigkeitsmeßvorrichtung 28 auf die variable Lenkübersetzungsvorrichtung 26 gegeben. In einem Soll-Ist-Wert-Vergleich 30 erfolgt ein Vergleich des aus der Vorrichtung 26 kommenden Sollwertes mit einem Ist-Wert, der von einem Sensor 32 geliefert wird, der den Lenkeinschlag der Räder 10, 12 detektiert. Entsprechend der Regelabweichung geht ein Regelsignal auf einen Positionsregler 34, der ein Stellsignal für das Lenkventil 20 erzeugt für den Pumpenmotor 18 über eine Pumpenmotorsteuerung 36.

Das Lenkventil 20 ist kein einfaches Schaltventil, sondern öffnet proportional in Abhängigkeit von den Steuersignalen, welche vom Positionsregler 34 auf die zugehörigen Elektromagneten 38 bzw. 40 gegeben werden. Dadurch wird die Geschwindigkeit der Lenkbewegung der Räder 10, 12 beeinflußt.

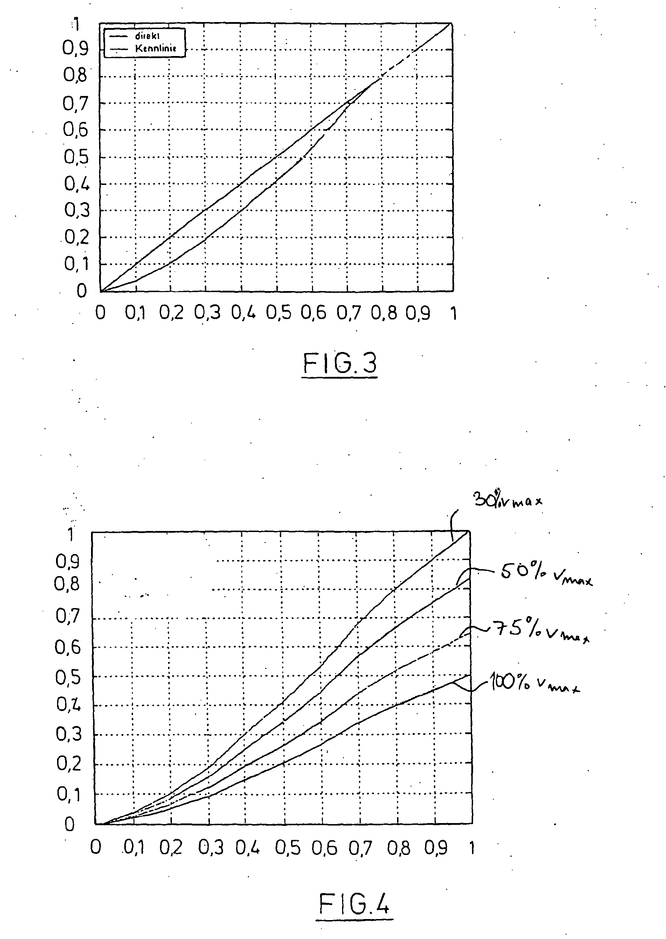

In Fig. 3 ist auf der Ordinate des Diagramms der Verstellweg des Lenkzylinders 14 nach Fig. 1 aufgetragen und auf der Abszisse der Weg des Lenkers 22, jeweils ausgehend von der Mittelstellung zu einer beliebigen Seite. In durchgezogener Linie ist eine Gerade eingezeichnet, welche eine lineare Übersetzung zwischen Lenker 22 und hydraulischer Lenkung wiedergibt. Darunter gezeichnet ist eine progressive Kennlinie, die etwa die Kennlinie wiedergibt, welche in der Vorrichtung 24 nach Fig. 1 zur Wirkung gelangt.

Der Lenker 22 nach Fig. 1 hat einen begrenzten maximalen Drehwinkel, vorzugsweise 110° zu beiden Seiten einer Neutralstellung, welche der Geradeaus-Fahrt entspricht. Die Übersetzung vom Lenker zu den gelenkten Rädern wird mit der Fahrgeschwindigkeit verstellt. Dieser Zusammenhang ist in Fig. 4 dargestellt. Auf der Ordinate ist wiederum der Verstellweg des Lenkzylinders 14 zu einer Seite aufgetragen und auf der Abszisse der Drehwinkel des Lenkers 22 zu einer Seite. Die Kennlinien zeigen die geschwindigkeitsabhängige Lenkübersetzung, wobei der Lenkeinschlag der Räder 10, 12 um so stärker begrenzt wird, je größer die maximale Geschwindigkeit ist.

Die progressive Kennlinie aus Fig. 3 ist in den Kennlinien aus Fig. 4 bereits enthalten.

In Fig. 2 ist ein Lenker 8 detailliert dargestellt. Der Lenkkranz weist im Umriß annähernd ovale Form auf. Ein Basisabschnitt 44 des Lenkkranzes, der sich in der Neutralstellung des Lenkers 8 quer zum Fahrer erstreckt und diesem zugewandt ist, ist mittig mit einer Nabe (nicht gezeigt) verbunden, die ihrerseits mit einer Welle 9 verbunden ist (s. Fig. 6). Die Nabe weist eine Nabenabdeckung 42 auf. An den Enden geht der Basisabschnitt 44 gerundet in kurze Seitenabschnitte 46, 48, und diese gerundet in einen oberen längeren Abschnitt 50 über. Die genannten Abschnitte liegen etwa in einer Ebene. Die Lage der Ebene richtet sich nach der Sitz- oder Stehposition des Fahrers in der Fahrerkabine bzw. im Fahrerstand (s. Fig. 6). Der Querschnitt der Seitenabschnitte 46, 48, des Basisabschnitts 44 und des Abschnitts 50 ist annähernd kreisförmig. Die Seitenabschnitte 46, 48 sind Griffabschnitte, die in der Ansicht nach Fig. 2 von oben und seitlich ergriffen werden.

Symmetrisch zur Mittelebene der Nabenabdeckung 42 sind auf gegenüberliegenden Seiten an dieser jeweils zwei tastenartige Bedienelemente 60, 62 bzw. 64, 66 angeordnet. Die Bedienelemente 60 bis 66 haben Mulden 68 und werden dadurch betätigt, dass der Daumen der Hand, welche den Seitenabschnitt 46 bzw. 48 erfaßt, in eine Mulde 68 eingreift und das entsprechende Bedienelement nach unten drückt. Schaltkontakte für die Bedienelemente und gegebenenfalls eine Schaltplatine können unterhalb der Abdeckung 42 angeordnet sein, und Verbindungsleitungen der Bedienelemente 60 bis 66 zu den zugehörigen Steuervorrichtungen erstrecken sich z.B. durch die Welle 9 des Lenkers 8 zu den entsprechenden Steuervorrichtungen im Fahrzeugkörper 6 (nicht gezeigt).

Die Bedienelemente 60 bis 66 dienen zur Betätigung bestimmter Funktionen des Flurförderzeugs, und sind vorzugsweise kontinuierlich bedienbar und z.B. mittels einer Federanordnung in eine neutrale Mittelstellung vorgespannt. Das Bedienelement 60 dient z.B. zum Neigen des Hubgerüstes 13 (Fig. 6). Das Bedienelement 64 dient z.B. zum Heben und Senken des Lasttragmittels. Ein Hebevorgang erfolgt z.B. wenn das Bedienelement 64 von oben gedrückt wird. Ein Senken findet statt, wenn das Bedienelement 64 von unten erfaßt und hochgehoben wird. Das Bedienelement 66 dient z.B. zur Betätigung eines Seitenschiebers. Ein Seitenschieber ermöglicht eine Querverstellung des Lasttragmittels 11 (Lastgabel) relativ zur Längsachse des Staplers 1. Das Bedienelement 62 kann zur Betätigung weiterer Funktionen dienen. Der obere Abschnitt der Nabenabdeckung 42 kann ebenfalls als Bedienelement z.B. als Tastschalter verwendet werden, z.B. für eine Hupe. Im Bereich des Basisabschnitts 44 sind drei Bedienelemente 70, 72 und 74 (Tastschalter) nebeneinander angeordnet. Das Bedienelement 70 dient z.B. zur Einstellung eines Schleichfahrtmodus. Das Bedienelement 72 dient z.B. zur Betätigung einer Parkbremse. Das Bedienelement 74 dient zur Betätigung einer weiteren, nicht näher spezifizierten Funktion.

In Fig. 2 befinden sich auf gegenüberliegenden Seiten der Nabenabdeckung 42 im Abstand zu den Bedienelementen 60 bis 66 paddelförmige Bedienelemente 76, 78. Sie dienen zur Vorgabe der Fahrtrichtung des Flurförderzeugs 1. Sie können entweder gedrückt werden, beispielsweise mit dem Zeigefinger oder dem Daumen einer Hand oder in Richtung des zugehörigen Bedienelements darüber gezogen werden, je nachdem, welche Fahrtrichtung gewählt wird.

Wie schon erwähnt, können alle gezeigten Bedienelemente bzw. Tastschalter bequem vom Fahrer mit dem Daumen oder Zeigefinger einer Hand betätigt werden, wenn eine oder beide Hände die Abschnitte 46, 48 des Lenkkranzes des Lenkers 8 erfassen.

Im Bereich der Nabenabdeckung 42 kann auch ein Display angeordnet sein.

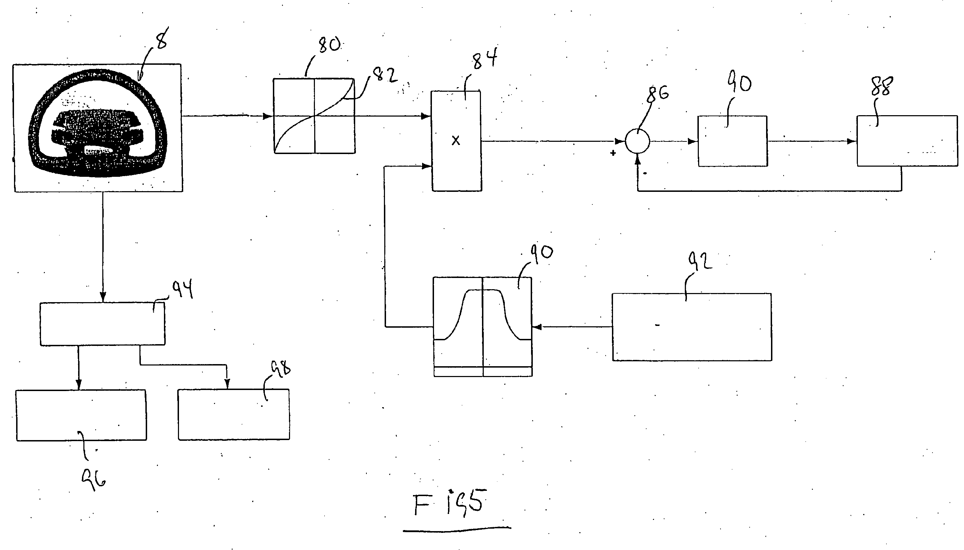

In Fig. 5 ist ein Blockdiagramm zum Betrieb des Flurförderzeugs nach Fig. 6 wiedergegeben für die Funktionen Lenken und Hydraulik-Bedienung. Man erkennt den Lenker 8 gemäß Fig. 2, der entsprechend dem Ausschlag oder Winkel ein Signal auf eine Übersetzungsvorrichtung 80 gibt, in dem eine progressive Lenk-Kennlinie 82 abgelegt ist. Dies bedeutet, dass bei kleinen Lenkausschlägen im Bereich der Neutralstellung des Lenkers 8 ein relativ kleines Signal erzeugt wird, das jedoch bei größer werdenden Lenkerausschlägen progressiv ansteigt. Die Lenkung wird mit zunehmendem Verdrehwinkel des Lenkers 8 direkter. Dieses Signal wird auf einen Multiplikator 84 gegeben, dessen Ausgangssignal einen Lenkwinkel-Sollwert vorgibt. Dieser Sollwert gelangt auf einen Soll-Ist-Wert-Vergleich 86, in den auch ein Lenkwinkel-Istwert gegeben wird. Bei 88 ist die Lenkvorrichtung für die gelenkten Räder verkörpert, beispielsweise durch eine elektrische oder elektro-hydraulische Verstellung, wie sie auch in Verbindung mit Figur 1 beschrieben wurde. Die tatsächliche Auslenkung der Räder wird dann, wie erwähnt, auf den Soll-Istwert-Vergleich gegeben. Die Regelabweichung gelangt auf einen Positionsregler 90 zur entsprechenden Verstellung der gelenkten Räder über einen geeigneten Aktuator.

In den Multiplikator 84 gelangt ein weiteres Signal, das von einem Block 90 kommt, in dem eine geschwindigkeitsabhängige Kennlinie gespeichert ist.

Eine Fahrgeschwindigkeitsmeßvorrichtung 92 mißt die Fahrgeschwindigkeit des Flurförderzeugs 1, und vom Block 90 gelangt ein entsprechender Wert auf den Multiplikator 84. Mithin ist der Lenkwinkel-Sollwert abhängig von der progressiven Kennlinie 82 und einem geschwindigkeitsabhängigen Faktor. Die resultierende Lenkübersetzung für verschiedene beispielhafte Fahrgeschwindigkeiten zeigt Fig. 4, wobei auf der Abszisse der normierte Winkel des Lenkers von der Geradeaus-Position bis zu einem Anschlag dargestellt ist; die Ordinate stellt den normierten Anschlag des gelenkten Rades von der Geradeaus-Position bis zu einem Anschlag dar. Es wird offensichtlich, dass bei hoher Fahrgeschwindigkeit trotz vollem Anschlag des Lenkers das gelenkte Rad den vollen Anschlag nicht erreicht. Auf diese Weise wird die Lenkbarkeit und Sicherheit des Fahrzeugs erhöht.

Die Bedienelemente 60, 64 und 66 des Lenkers 8 gemäß Fig. 2 dienen zur Ansteuerung einer Hydraulik, beispielsweise zum Ansteuern eines Hubantriebes für das Lasttragmittel 11 nach Fig. 6. In Figur 5 ist ein Block für eine Hubsteuerung angedeutet. Diese ist verbunden mit einem Hydraulik-Aggregat 96, das einen Motor und eine vom Motor angetriebene Hydraulikpumpe enthält. Ferner erfolgt eine Steuerverbindung zu Hydraulikventilen 98 zur Steuerung des Heben- und Senkenbetriebes sowie der weiteren hydraulisch betätigten Funktion des Flurförderzeugs nach Figur 6.

Der Lenker 8 ist, wie bereits erwähnt, mit der Welle 9 verbunden, die in geeigneten Lagern drehbar gelagert ist. Die Welle ist mit der Nabe auf der in Fig. 2 gegenüberliegenden Seite des Lenkers 8 verbunden. Die einzelnen Bedienelemente des Lenkers 8 erfordern elektrische Leitungen zur Verbindung mit den einzelnen Funktionen des Staplers. Statt jedes der Bedienelemente über eine eigene Leitung mit einer Zentralsteuerung im Stapler zu verbinden, kann auch eine CAN-BUS-Verbindung vorgesehen werden, so daß in der Welle lediglich eine Busverbindung hergestellt ist. Im Lenker 8 kann ein Prozessor integriert sein, um die einzelnen Signale von den Bedienelementen über den Bus zur Zentralsteuerung zu übertragen.

Es sei noch angemerkt, dass es mit Hilfe der beschriebenen Lenkvorrichtung möglich ist, den Lenker 8 bzw. die Welle 9 in der Kabine des Staplers 1 nach Figur 6 annähernd in der Mitte anzuordnen. Aufgrund der elektrischen Übertragung der Lenkersignale benötigt die Lenkung in der Kabine wenig Platz. Daher bleibt auch genügend Platz, z.B. seitlich des Lenkers 8 bestimmte Bedienvorrichtungen, z.B. einen Bordcomputer oder dergleichen, anzuordnen.

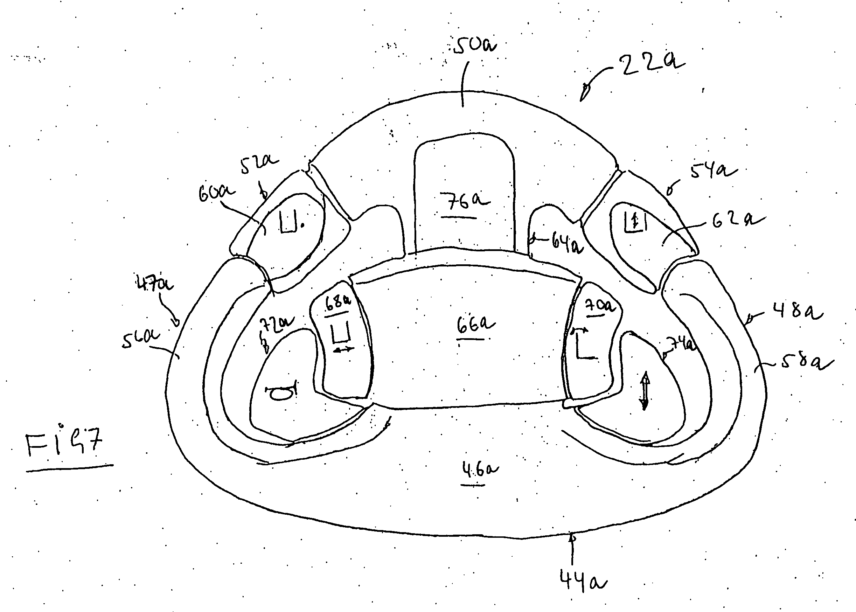

In Fig. 7 ist eine andere Ausführungsform eines Lenkers 22a detailliert dargestellt. Er weist im Umriß annähernd Dreiecksform auf mit stark abgerundeten Ecken. Ein Basisabschnitt 44a, der sich in der Neutralstellung des Lenkers 22a quer zum Fahrer erstreckt und diesem zugewandt ist, weist einen verbreiterten Mittelabschnitt 46a auf. Zu den Enden zu beiden Seiten ist der Basisabschnitt 44a zunehmend verjüngt und in Verbindung mit Schenkelabschnitten 47a, 48a, die zu einem Scheitelabschnitt 50a konvergieren. Die genannten Abschnitte liegen in etwa in einer Ebene. Die Lage der Ebene richtet sich nach der Sitz- oder Stehposition des Fahrers in der Fahrerkabine bzw. im Fahrerstand. Die Außenkontur der Schenkelabschnitte 47a, 48a, des Basisabschnitts 44a und des Scheitelabschnitts 50a ist bogenförmig gerundet. Im Verlauf der Schenkelabschnitte 47a, 48a sind tonnenförmige Bedienelemente 52a, 54a angeordnet, die um eine Achse begrenzt verdrehbar sind, welche annähernd mit der Achse des zugehörigen Schenkelabschnitts 47a, 48a zusammenfällt. Unterhalb der Bedienelemente 52a, 54a bilden die Schenkelabschnitte 47a, 48a Griffabschnitte 56a, 58a, die in der Ansicht nach Fig. 7 von oben und seitlich ergriffen werden, wobei die Bedienelemente 52a, 54a mit dem Daumen betätigt werden können, welcher in Mulden 60a bzw. 62a eingreift. Das rechte Bedienelement 54a dient z.B. zum Heben und Senken des Lasttragmittels am Mast des nicht gezeigten Staplers. Das linke Bedienelement 52a dient z.B. für nicht genannte Zusatzfunktionen.

Ein Speichenabschnitt 64a verbindet Scheitelabschnitt 50a mit Mittelabschnitt 46a. Der Speichenabschnitt 64a weist nahe dem Mittelabschnitt 46a eine Verbreiterung 66a auf, welche sich in den Raum hineinerstreckt, welcher von den Schenkelabschnitten 47a, 48a, dem Basisabschnitt 44a und dem Speichenabschnitt 64a gebildet ist.

Die freien Enden der Verbreiterung 66a sind konkav geformt. Wie erkennbar, sind an den freien Enden der Verbreiterung 66a tastenförmige Bedienelemente 68a, 70a angeordnet, die an der Verbreiterung 66a gelagert sind und in ihrer Kontur an die konkave Endkontur der Verbreiterung 66a angepaßt sind. Dadurch ergibt sich eine segmentartige Konfiguration. Die Bedienelemente 68a, 70a sind vorzugsweise kippbar, indem mit einem Finger entweder am oberen oder am unteren Ende ein Druck ausgeübt wird. Dadurch erfolgt mit Hilfe des Bedienelements 68a eine Seitenverschiebung des Lasttragmittels und durch Betätigung des Bedienelements 70a ein Kippen des Lasttragmittels bzw. des zugehörigen Mastes.

Winkelförmige weitere Bedienelemente 72a, 74a befinden sich ebenfalls im Raum zwischen den Schenkelabschnitten 47a, 48a und dem Speichenabschnitt 64a. Der eine Schenkel der Bedienelemente 72a, 74a ist am Mittelabschnitt 46a gelagert und der andere Schenkel erstreckt sich in den genannten Raum hinein annähernd parallel zu den Griffabschnitten 56a, 58a und den Bedienelementen 68a, 70a. Das Bedienelement 72a dient etwa zur Betätigung einer Hupe und braucht daher lediglich mit dem Finger nach unten gedrückt zu werden, wozu eine Schwenklagerung am Mittelabschnitt 46a ausreicht. Das rechte Bedienelement 74a dient etwa zum Fahrtrichtungswechsel. Es wird ebenfalls durch Fingerdruck betätigt und führt zur Umkehr der Fahrtrichtung. Da es auch zur Vorgabe der Fahrtrichtung dienen kann, muß eine kippbare Lagerung vorgesehen werden, damit die jeweilige Fahrtrichtungsvorgabe durchgeführt werden kann.

Die Lagerung der einzelnen Bedienelemente 68a bis 74a kann von einem Fachmann in beliebiger Weise ausgeführt werden und wird daher nicht im einzelnen beschrieben.

Im Bereich des Scheitelabschnitts 50a befindet sich im Speichenabschnitt 64a ein Display 76a zur Anzeige verschiedener Funktionen des nicht gezeigten Flurförderzeugs. Statt dessen können in dem Feld des Displays 76a auch lediglich Warn- und Kontrolleuchten vorgesehen werden.

Der Lenker 22a ist, wie bereits erwähnt, mit einer Welle verbunden, die in geeigneten Lagern drehbar gelagert ist. Die Welle ist mit dem Speichenabschnitt 64a auf der in Fig. 7 gegenüberliegenden Seite verbunden. Die einzelnen Bedienelemente des Lenkers 22a erfordern elektrische Leitungen zur Verbindung mit den einzelnen Funktionen des Flurförderzeugs. Statt jedes der Bedienelemente über eine eigene Leitung mit einer Zentralsteuerung im Stapler zu verbinden, kann auch eine CAN-BUS-Verbindung erfolgen, so daß in der Welle lediglich eine Busverbindung hergestellt ist. Im Lenker 22a kann ein Prozessor integriert sein, um die einzelnen Signale von den Bedienelementen über den Bus zur Zentralsteuerung zu übertragen.

## Patentansprüche

1. Gegengewichtsstapler mit einer Vorrichtung für eine elektro-hyraulische oder elektrische Lenkung mindestens eines Rades (4, 10, 12) des Gegengewichtsstaplers, die einen Lenker (22, 22a, 8) aufweist, der mittels einer Welle (9) um eine Achse drehbar gelagert und mit einem elektrischen Lenkgeber gekoppelt ist, der in Abhängigkeit vom Drehwinkel des Lenkgebers ein Lenksignal für das Rad (10, 12) erzeugt, ferner eine Geschwindigkeitsmeßvorrichtung (28, 92) aufweist, die die Geschwindigkeit des Gegengewichtsstaplers mißt, sowie eine erste Übersetzungsstufe (26, 84), in welcher das Lenksignal des Lenkgebers gegeben wird und dessen den Lenkwinkel des Rades (10, 12) bestimmendes Ausgangssignal in Abhängigkeit von dem Geschwindigkeits signal der Geschwindigkeitsmeßvorrichturtg (28, 92) so geändert wird, daß das Ausgangssignal im Verhältnis zum Lenksignal mit größer werdender Staplergeschwindigkeit zunehmend kleiner wird, **dadurch gekennzeichnet, daß** das Lenksignal des Lenkgebers zunächst in eine weitere Übersetzungsstufe (24, 80) mit progressiver Lenkübersetzung gegeben wird und das Ausgangssignal der zweiten Übersetzungsstufe (24, 80) auf die erste Übersetzungsstufe (26, 84) gegeben wird, wobei bei kleinen Lenkausschlägen im Bereich der Neutralstellung des Lenkers (22, 22a, 8) ein relativ kleines Signal erzeugt wird, das jedoch bei größer werdenden Lenkausschlägen progressiv ansteigt und daß der maximale Lenkausschlag des Lenkers (22, 22a, 8) zu beiden Seiten einer Neutralstellung kleiner als 180° und durch feste Anschläge begrenzt ist

2. Stapler nach Anspruch 1, **dadurch gekennzeichnet, daß** er
- eine Fahrerkabine,
- Vorder- und Hinterräder (2; 4), wobei die Hinterräder (4) lenkbar sind,
- ein Hubgerüst (13), das in seiner Neigung verstellbar ist,
- ein Lasttragmittel (11), das im Hubgerüst (13) geführt in der Höhe verstellbar ist, aufweist, und der
- Lenker (8, 22, 22a) einen Lenkkranz und eine Nabe aufweist, und
- mindestens zwei an der Nabe angebrachte Bedienelemente (60 bis 66, 76, 78) zur Verstellung der Höhe des Lasttragmittels (11) und der Neigung des Hubgerüstes (13) vorgesehen sind.

3. Stapler nach Anspruch 1 oder 2, **dadurch gekennzeichnet, daß** der maximale Lenkerausschlag etwa 110° ist.

4. Stapler nach Anspruch 1 oder 2, **dadurch gekennzeichnet, daß** der Lenker (8; 22; 22a), mittels einer Federanordnung in die Neutralstellung vorgespannt ist.

5. Stapler nach Anspruch 1 oder 2, **dadurch gekennzeichnet, daß** Mittel zur Begrenzung der maximalen Lenkgeschwindigkeit vorgesehen sind und die Mittel die maximale Lenkgeschwindigkeit der Hinterräder (4; 10; 12) in Abhängigkeit von der Geschwindigkeit des Staplers verändern.

6. Stapler nach Anspruch 1 oder 2, **dadurch gekennzeichnet, daß** dem Lenker (8; 22; 22a) eine Drehdämpfungsvorrichtung zugeordnet ist.

7. Stapler nach Anspruch 6, **dadurch gekennzeichnet, daß** die Drehdämpfungsvorrichtung in der Wirkungsstärke verstellbar ist.

8. Stapler nach Anspruch 7, **dadurch gekennzeichnet, daß** die Verstellung der Wirkungsstärke abhängig vom Fahrzustand des Gegengewichtsstaplers (1) und/oder der Drehrichtung oder -Position des Lenkers (8; 22; 22a) ist.

9. Stapler nach Anspruch 1 oder 2, **dadurch gekennzeichnet, daß** Mittel zur Begrenzung des Lenkausschlags der Hinterräder (10; 12; 4) vorgesehen sind und die Mittel den Lenkausschlag in Abhängigkeit von der Höhe des Lasttragmittels (11) und/oder der Größe der Last und/oder der Neigung des Hubgerüstes (13) und/oder der Lage eines Seitenschiebers für das Lasttragmittel (11) auf einen vorgegebenen Wert begrenzen.

10. Stapler nach Anspruch 2, **dadurch gekennzeichnet, daß** der Lenkkranz des Lenkers (8) annähernd oval geformt ist und mit der Innenseite des dem Fahrer zugekehrten Längsabschnitts des Lenkkranzes eine mit der Welle verbundene Nabe verbunden ist, die Nabe eine Abdeckung (42) aufweist, an der die Bedienelemente (60 bis 66; 76; 78) als Tasten beweglich so gelagert sind, daß sie mit dem Daumen oder einem Finger einer Hand betätigt werden können, die den Lenkkranz im Bereich eines kürzeren seitlichen Abschnitts (46; 48) des ovalen Lenkkranzes von oben oder seitlich umfaßt.

11. Stapler nach Anspruch 10, **dadurch gekennzeichnet, daß** jeweils zwei Bedienelemente (60; 62; 64; 66) auf gegenüberliegenden Seiten der Abdeckung (42) annähernd symmetrisch zur Mittelachse des Lenkers (8) in seiner Neutralstellung angeordnet sind.

12. Stapler nach Anspruch 10 oder 11, **dadurch gekennzeichnet, daß** weitere tastenförmige Bedienelemente (76; 78) für die Betätigung weiterer Funktionen des Gegengewichtsstaplers im Bereich des hinteren Längsabschnitts des Lenkkranzes angebracht sind.

13. Stapler nach Anspruch 10, **dadurch gekennzeichnet, daß** im mittleren Bereich der Abdeckung (42) ein Display angeordnet ist.

14. Stapler nach Anspruch 10, **dadurch gekennzeichnet, daß** elektrische Schaltungen oder Potentiometer, die den Bedienelementen (60 bis 66; 76; 78) zugeordnet sind, unterhalb der Abdeckung (42) angeordnet und die elektrischen Schalter und Potentiometer mit einer Schaltplatine unterhalb der Abdeckung (42) verbunden sind.

15. Stapler nach Anspruch 2, **dadurch gekennzeichnet, daß** der Lenker annähernd auf der Mittelachse des Staplers angeordnet ist.

16. Stapler nach Anspruch 1 oder 2, **dadurch gekennzeichnet, daß** der Lenker (22a) annähernd Dreiecksform mit stark abgerundeten Ecken aufweist, wobei der Basisabschnitt (44a) dem Fahrer zugewandt und in der Neutralstellung annähernd quer zur Blickrichtung des Fahrers erstreckt ist, eine mit der Welle verbundene Speichenabschnitt den Scheitel (50a) mit einem Mittelabschnitt (46a) des Basisabschnitts (44a) verbindet, wobei die den Scheitelabschnitt (50a) mit den Enden des Basisabschnitts (44a) verbindenden Schenkelabschnitte (47a; 48a) ringförmige Bedienelemente (52a; 54a) aufweisen, deren Drehachse annähernd mit der Achse der Schenkelabschnitte (47a; 48a) zusammenfällt und auf den gegenüberliegenden Seiten der Speichenabschnitte Bedienelemente (68a; 70a; 72a; 34a) für Funktionen des Staplers angeordnet sind, die entweder an dem Speichenabschnitt (64a) oder dem Mittelabschnitt (46a) gelagert sind.

17. Stapler nach Anspruch 16, **dadurch gekennzeichnet, daß** tastenartige Bedienelemente 68a; 70a) an den Enden eines Queransatzes des Speichenabschnitts (64a) angeordnet sind.

18. Stapler nach Anspruch 16 oder 17, **dadurch gekennzeichnet, daß** winkelförmige Bedienelemente (72a; 74a) im Zwischenraum zwischen dem Speichenabschnitt und den Schenkelabschnitten (47a; 48a) angeordnet sind, von denen jeweils ein Schenkel am Fuß des Speichenabschnitts (64a) oder dem verbreiterten Mittelabschnitt (66a) des Basisabschnitts (44a) gelagert ist, während der jeweils andere Schenkel zum Scheitelabschnitt (50a) hin erstreckt ist, annähernd parallel zum zugehörigen Schenkelabschnitt (47a; 48a).

19. Stapler nach Anspruch 17 und 18, **dadurch gekennzeichnet, daß** der freie Schenkel der winkelförmigen Bedienelemente (70a; 72a) auf der Außenseite des zugeordneten tastenförmigen Bedienelements (68a; 70a) liegt.

20. Stapler nach Anspruch 16, **dadurch gekennzeichnet, daß** im scheitelnahen Bereich des Speichenabschnitts (64a) ein Anzeigenfeld oder ein Display (76a) angeordnet ist.

## Claims

1. Counterbalanced forklift truck comprising a device for an electro-hydraulic or electric steering of at least one wheel (4, 10, 12) of the counterbalanced forklift truck, having a steering wheel (22, 22a, 8), which is pivoted about an axis by means of a shaft section (9) and coupled with an electric steering transmitter which generates a steering signal for the wheel (10, 12) dependent on the steering angle of the steering transmitter, further having a velocity measuring device (28, 92) measuring the speed of the forklift truck as well as a first transmission ratio (26, 84) in which the steering signal of the steering transmitter is given and whose output signal determining the steering angle of the wheel (10, 12) is changed dependent of the speed signal of the velocity measuring device (28, 92), such that the output signal decreases in relation to the steering signal with increasing speed of the forklift truck, **characterized in that** the steering signal of the steering transmitter is at first directed to a further transmission ratio (24, 80) with progressive steering transmission ratio and the output signal of the second transmission ratio (24, 80) is directed to the first transmission ratio (26, 84), wherein, upon small steering angles near the neutral position of the steering wheel (22, 22a, 8), a relatively small signal is generated but progressively increasing with increasing steering angles and that the maximum steering angle of the steering wheel (22, 22a, 8) to both sides of a neutral position is smaller than 180° and is limited by fixed limit stoppers.

2. Forklift truck according to claim 1, **characterized in that** it comprises
• a driver's cab,
• front and rear wheels(2; 4), where the rear wheels (4) are steerable,
• a mast (13), that is adjustable in its tilt,
• a load-carrier (11), that is adjustable in height and guided in the mast (13), and the
• steering wheel (8, 22, 22a) has a steering ring and a hub, and
• at least two control elements (60 to 66, 76, 78) mounted on the hub for adjustment of the height of the load-carrier (11) and the tilt of the mast (13) are provided.

3. Forklift truck according to claim 1 or claim 2, **characterized in that** the maximum steering angle is approximately 110°.

4. Forklift truck according to claim 1 or claim 2, **characterized in that** the steering wheel (8, 22; 22a) is pretensioned by means of springs in the neutral position.

5. Forklift truck according to claim 1 or claim 2, **characterized in that** the means for limiting the maximum steering speed are provided and the means change the maximum steering speed of the rear wheels (4; 10; 12) dependent on the speed of the forklift truck.

6. Forklift truck according to claim 1 or claim 2, **characterized in that** the steering wheel (8; 22; 22a) is assigned a rotary damping device.

7. Forklift truck according to claim 6, **characterized in that**, the rotary damping device is adjustable in the operative strength.

8. Forklift truck according to claim 7, **characterized in that** the adjustment of the operative strength is dependent on the driving condition of the forklift truck (1) and/or the turning direction or turning position of the steering wheel (8; 22; 22a).

9. Forklift truck according to claim 1 or claim 2, **characterized in that** means to limit the steering angle of the rear wheels (10; 12; 4) are provided and the means limit the steering angle dependent on the height of the load-carrier (11) and/or the size of the load and/or the tilt of the mast (13) and/or the position of a side shift for the load-carrier (11) to a preset value.

10. Forklift truck according to claim 2, **characterized in that** the steering ring of the steering wheel (8) is an approximately oval shape and with the inside of the lengthwise section of the steering ring facing the driver a hub connected with the shaft section is connected, the hub has a cover (42) on which the control elements (60 to 66; 76; 78) as push-buttons are mounted so moveable that they can be operated with the thumb or a finger of one hand, which includes the steering ring in the area of a short side section (46; 48) of the oval steering ring from above or the side.

11. Forklift truck according to claim 10, **characterized in that** two control elements (60; 62; 64; 66) each on opposite sides of the cover (42) are arranged approximately symmetrical to the middle axis of the steering wheel (8) in its neutral position.

12. Forklift truck according to claim 10 or claim 11, **characterized in that** additional other push-button shaped control elements (76; 78) for the activation of other functions of the forklift truck are mounted in the area of the back lengthwise section of the steering ring.

13. Forklift truck according to claim 10, **characterized in that** a display is arranged in the middle area of the cover (42).

14. Forklift truck according to claim 10, **characterized in that** electric switches or potentiometers which are associated with the control elements (60 to 66; 76; 78) are arranged under the cover (42) and the electric switch and potentiometer are connected with a switch circuit board under the cover (42).

15. Forklift truck according to claim 2, **characterized in that** the steering wheel is arranged approximately on the middle axis of the forklift truck.

16. Forklift truck according to claim 1 or 2, **characterized in that** the steering wheel (22a) has an approximate triangular shape with extremely rounded corners, whereby the base section (44a) faces the driver and in the neutral position extends almost crosswise to the line of vision of the driver, a middle spoke connected with the shaft section connects the peak (50a) to a middle section (46a) of the base section (44a), whereby the side sections (47a; 48a) connecting the peak (50a) with the ends of the base section (44a) have ringshaped control elements (52a; 54a), whose center of rotation falls approximately with the axis of the side sections (47a; 48a) and on the opposite sides of the middle spoke are arranged control elements (68a; 70a) for functions of the industrial truck, which are mounted either on the middle spoke (64a) or on the middle section (46a).

17. Forklift truck according to claim 16, **characterized in that** push-button type control elements (68a; 70a) are arranged on the ends of a cross extension of the middle spoke (64a).

18. Forklift truck according to claim 16 or 17, **characterized in that** angular control elements (72a, 74a) are arranged in the space between the middle spoke and the side sections (47a; 48a), from which on each is mounted a side on the foot of the middle spoke (64a) or on the widened middle section (66a) of the base section (44a), while each of the other sides stretch to the peak (50a), approximately parallel to the associated side section (47a, 48a).

19. Forklift truck according to claim 17 und 18, **characterized in that** the free side of the angular control elements (70a; 72a) lies on the outside of the related push-button shaped control elements (68a; 70a).

20. Forklift truck according to claim 16, **characterized in that** in the area near the peak of the middle spoke (64a) a display field or a display (76a) is arranged.

## Revendications

1. Chariot élévateur à contrepoids avec un dispositif pour un renvoi de direction électro-hydraulique ou électrique d'au moins une roue (4, 10, 12) du chariot élévateur à contrepoids, qui présente un volant (22, 22a, 8) qui est logé de façon tournante autour d'un axe au travers d'un arbre (9) et qui est couplé à un transmetteur de direction électrique qui génère un ordre de guidage pour la roue (10, 12) en fonction de l'angle de rotation du transmetteur de direction, qui présente en outre un dispositif mesureur de vitesse (28, 92) qui mesure la vitesse du chariot élévateur à contrepoids, ainsi qu'un premier niveau de compilation (26, 84) dans lequel l'ordre de guidage du transmetteur de direction est introduit et dont le signal de sortie déterminant l'angle de direction de la roue (10, 12) est changé en fonction du signal de vitesse du dispositif mesureur de vitesse (28, 92), tellement que le signal de sortie devient de plus en plus petit en relation à l'ordre de guidage quand la vitesse du chariot augmente, **caractérisé en ce que** l'ordre de guidage du transmetteur de direction est tout d'abord introduit dans un autre niveau de compilation (24, 80) avec rapport de direction progressif, et le signal de sortie de ce deuxième niveau de compilation (24, 80) est introduit dans le premier niveau de compilation (26, 84), un signal relativement petit étant généré sur des petits braquages dans la région de la position neutre du volant (22, 22a, 8), ledit signal cependant augmentant progressivement quand les braquages deviennent plus grands, et **en ce que** le braquage maximal du volant (22, 22a, 8) soit plus petit que 180° et limité par des butées fixes dans les deux côtés d'une position neutre.

2. Chariot élévateur selon la revendication 1, **caractérisé en ce qu'**il présente
• une cabine du conducteur
• des roues avant et arrière (2; 4), les roues arrière (4) étant dirigeables,
• un cadre élévateur (13), qui est ajustable dans son inclinaison,
• un dispositif de charge (11), qui étant guidé dans le cadre élévateur (13) est ajustable en hauteur, et
• que le volant (22, 22a, 8) présente une couronne de direction et un moyeu, et
• au moins deux éléments de réglage (60 à 66, 76, 78) attachés dans le moyeu sont pourvus pour l'ajustage de la hauteur du dispositif de charge (11) et de l'inclinaison du cadre élévateur (13).

3. Chariot élévateur selon la revendication 1 ou 2, **caractérisé en ce que** le braquage maximal du volant est environ 110°.

4. Chariot élévateur selon la revendication 1 ou 2, **caractérisé en ce que** le volant (22, 22a, 8) est précontraint à la position neutre par un arrangement de ressorts.

5. Chariot élévateur selon la revendication 1 ou 2, **caractérisé en ce que** des moyens pour limiter la vitesse maximale de direction sont pourvus, et ces moyens changent la vitesse maximale de direction des roues arrière (4; 10; 12) en fonction de la vitesse de marche du chariot élévateur.

6. Chariot élévateur selon la revendication 1 ou 2, **caractérisé en ce qu'**un amortisseur de rotation est associé au volant (22, 22a, 8).

7. Chariot élévateur selon la revendication 6, **caractérisé en ce que** l'amortisseur de rotation est ajustable dans l'intensité de son effet.

8. Chariot élévateur selon la revendication 7, **caractérisé en ce que** l'ajustage de l'intensité d'effet est en fonction de la condition de marche du chariot élévateur à contrepoids (1) et/ou du sens ou de la position de rotation du volant (22, 22a, 8).

9. Chariot élévateur selon la revendication 1 ou 2, **caractérisé en ce que** des moyens pour limiter le braquage des roues arrière (4; 10; 12) sont pourvus et que ces moyens limitent le braquage à une valeur prescrite, en fonction de la hauteur du dispositif de charge (11) et/ou de la taille de la charge et/ou de l'inclinaison du cadre élévateur (13) et/ou de la position d'un pousseur latéral pour le dispositif de charge (11).

10. Chariot élévateur selon la revendication 2, **caractérisé en ce que** la couronne de direction du volant (22, 22a, 8) est formée approximativement ovale et un moyeu raccordé à l'arbre est lié avec le côté intérieur de la section longitudinale de la couronne de direction en face du conducteur, le moyeu a un recouvrement (42) dans lequel les éléments de réglage (60 à 66, 76, 78) sont montés amovibles comme des touches, de façon qu'ils puissent être actionnés avec la pouce ou un doigt d'une main qui embrasse la couronne de direction du haut ou du côté dans la région d'une section latérale plus courte (46; 48) de la couronne de direction ovale.

11. Chariot élévateur selon la revendication 10, **caractérisé en ce que** deux éléments de réglage (60 à 66, 76, 78) respectivement sont arrangées dans des côtés opposés du recouvrement (42), approximativement symétrique à l'axe central du volant (8) dans sa position neutre.

12. Chariot élévateur selon la revendication 10 ou 11, **caractérisé en ce que** d'autres éléments de réglage (76, 78) en forme de touche pour l'actionnement d'autres fonctions du chariot élévateur sont installés dans la région de la section longitudinale arrière de la couronne de direction.

13. Chariot élévateur selon la revendication 10, **caractérisé en ce qu'**un écran de visualisation est arrangé dans la région centrale du recouvrement (42).

14. Chariot élévateur selon la revendication 10, **caractérisé en ce que** des circuits électriques ou potentiomètres qui sont associés aux éléments de réglage (60 à 66, 76, 78) sont arrangés au-dessous du recouvrement (42) et que les interrupteurs électriques ou potentiomètres sont raccordés avec une plaquette de circuits imprimés au-dessous du recouvrement (42).

15. Chariot élévateur selon la revendication 2, **caractérisé en ce que** le volant est arrangé approximativement dans l'axe central du chariot élévateur.

16. Chariot élévateur selon la revendication 1 ou 2, **caractérisé en ce que** le volant (22a) présente approximativement la forme d'un triangle avec des coins fortement arrondis, dans lequel la section de base (44a) est tournée vers le conducteur et s'étend approximativement de travers à la direction de vue du conducteur dans la position neutre, une section du rayon liée à l'arbre relie le sommet (50a) avec une section centrale (46a) de la section de base (44a), et dans lequel les sections de jambe (47a; 48a) reliant la section de sommet (50a) avec les extrémités de la section de base (44a) présent des éléments de réglage (52a; 54a) en forme d'anneau dont l'axe de rotation est approximativement coïncident avec l'axe des sections de jambe (47a; 48a), et des éléments de réglage (68a; 70a; 72a; 34a) pour des fonctions du chariot élévateur sont arrangés dans les côtés opposés des sections du rayon qui sont logés ou dans la section du rayon (64a) ou dans la section centrale (46a).

17. Chariot élévateur selon la revendication 16, **caractérisé en ce que** des éléments de réglage (68a; 70a) en forme de touche sont arrangés dans les extrémités d'un appendice transversal de la section du rayon (64a).

18. Chariot élévateur selon la revendication 16 ou 17, **caractérisé en ce que** des éléments de réglage (72a; 74a) en forme angulaire sont arrangés dans l'interstice entre la section du rayon et les sections de jambe (47a; 48a), dont une jambe respectivement est logée sur le pied de la section du rayon (64a) ou sur la section centrale élargie (66a) de la section de base (44a), tandis que la respective autre jambe s'étend vers la section du sommet (50a), approximativement en parallèle à la section de jambe (47a; 48a) associée.

19. Chariot élévateur selon la revendication 17 et 18, **caractérisé en ce que** la jambe libre des éléments de réglage (72a; 74a) en forme angulaire est située dans le côté extérieur de l'élément de réglage en forme de touche (68a; 70a) associé.

20. Chariot élévateur selon la revendication 16, **caractérisé en ce que** une zone de affichage ou un écran de visualisation (76a) est arrangé dans la région près du sommet de la section du rayon (64a).
